# EUROPEAN PATENT APPLICATION

(11) **EP 4 151 817 A1**
(43) Date of publication of application: **22.03.2023**
(21) Application number: 21197239.3
(22) Date of filing: 16.09.2021
(51) Int. Cl.: E04G 21/32, A01G 9/02, E04F 11/18

(54) **A GREEN ROOF EDGE FALL PROTECTION STRUCTURE**

(71) Applicant: Comforthome B.V., 3401 NS IJsselsteijn (NL)
(72) Inventor: Berlee, Anthonie Bernardus, 3735 MT Bosch en Duin (NL)
(74) Representative: Nederlandsch Octrooibureau

(57) **Abstract**

The Green Roof Edge Fall Protection Structure is characterized by a combination of a safe working and moving environment on a flat roof with the embellishment of the way the roof edge looks from the street, wherein the structure, unlike current systems, takes up as little roof space as possible. According to the invention, the guardrail structure is supported by the roof edge when forces are exerted on the guardrail (the main demand on the system's operation). By adjusting the supports individually to the correct height and at the right distance from each other, at and on the roof edge, the containers provide a horizontal line to the roofs visual appearance as well as a safety fence for children.

By weighting the containers and additionally filling them with plants, the building's aspect is further improved and the roof line may if the building's owner so desires be adapted, using for instance plants and flowers.

## Description

Flat roofs must conform to regulations. For one thing, flat roofs by definition are not really flat. To drain precipitation effectively to the drains provided, roofs need an effective slope. This serves to prevent pollution caused by stagnant water and/or roof collapse because of the weight of the water. Since a sloping line is not considered esthetically desirable in architecture, flat roofs have horizontal edges that hide the flat roof itself from view.

The height of roof edges is subject to licensing. To create maximum space inside the building without exceeding the allowed roof edge height, the watercheck at the edge of the roof should be as low as possible. In practice, roof edges are so low that thy do not prevent people from falling from the roof.

Flat roofs are increasingly used in built-up areas, for various reasons: to place installations and equipment, or for the use of the building's users and residents. Maintenance work on the roof, inspection work as well as work on installations, equipment, etcetera require a safe working environment. On many flat roofs fall protection has therefore been installed, so that people can work there safely. A distinction is made between fall arrest blocks and collective fall protection. Collective fall protection is mandatory when frequent work on the roof is required.

When a roof is generally accessible too, i.e. not only to workmen but for the general public including children, the fall protection provided must conform to additional regulations that roof edge protection for workmen does not satisfy.

Collective fall protection for workmen that is applied later often consists of a freestanding guardrail structure that is placed at the roof edge, wherein beams with counterweights (that serve to keep the guardrail upright when a force is exerted on it) stretch across a large part of the roof. Freestanding guardrail structures are not subject to licensing whereas permanent parapets (high roof edges included in the building's construction) are. Since roofs are not really flat, neither are freestanding guardrail structures, which does not look good since the roof edge is horizontal. Especially as seen from the street the result is not esthetically pleasing; people looking up at the top of the building will see it immediately. The counterweights on the roof limit the space available on flat roofs and are not very elegant. Certainly if the roof is to be used by the building's users or residents, they are in the way.

To do this differently and to be able to use the roof space more efficiently, the following solution has been invented and elaborated, which is essentially the invention according to the conclusions. The invention includes placing, at the roof edge, a freestanding guardrail structure including counterweights consisting of containers placed behind the roof edge, that is supported by the roof edge when a force is exerted on the guardrail. The containers' bottoms are placed level with the roof edge's top, so that when a force is exerted on the guardrail (which is what the guardrail structure is there for) an optimum counterpressure is exerted by the supporting roof edge.

The invention ensures that the guardrail structure provides safety, and since these counterweights and containers and their support by the roof edge eliminate the need for long beams on the roof, the entire guardrail structure is slimmer than is usually the case, so that a larger part of the roofs surface may be used for other purposes.

Moreover, the roof can still be cleaned under the structure, right up to the roof edge, as is needed for an uninterrupted drainage of rain water.

The adjustable support or supports, finally, allow the containers to be adapted such that a sightline is provided from behind the horizontal roof edge that corrects the sloping roof edge line that is parallel with the roof surface.

The containers, by the way they are placed, level with the roof edge and interconnected, provide a closed fence sealing off the roof, such that, in accordance with regulations for parapets, children cannot climb over or through the roof edge fall protection structure. This means that the roof edge fall protection structure can be placed as a self-supporting structure, on existing roofs, and that it conforms to regulations for both temporary and (semi)permanent protection facilities.

The containers may be used for plants and the like, if such is desired. In this way, attractive, green roof edge fall protection is provided. The Green Roof Edge Fall Protection Structure comprises adjustable supports with which an exactly horizontal line of containers with plants may be obtained. Since the support blocks and the containers function as counterweights, no long horizontal beams are required, which means that less of the roof surface is needed. Moreover, the roofs appearance will be improved.

In the following, the invention will be more extensively described using drawings and examples of implementations (that do not limit the invention). The figures show the following:
- Figure 1: a top view of a flat roof;
- Figure 2: a side view of a cross section of the system according to the invention, which clearly shows why no additional horizontal beams are needed;
- Figure 3: a side view of the invention;
- Figure 4: a detail of the system according to the invention, in both a side view and a top view, to clarify the invention's principle and functionality.

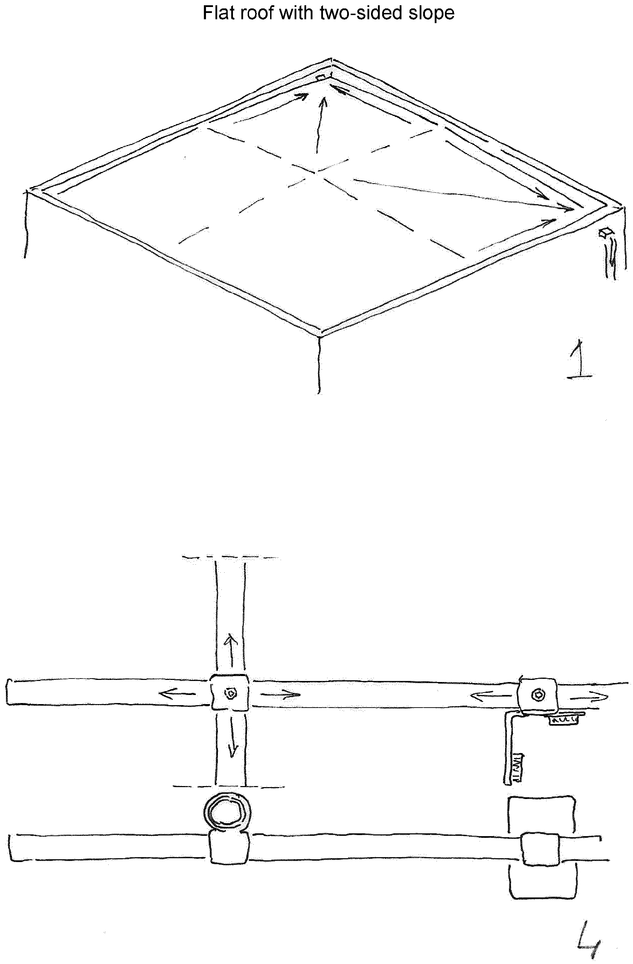

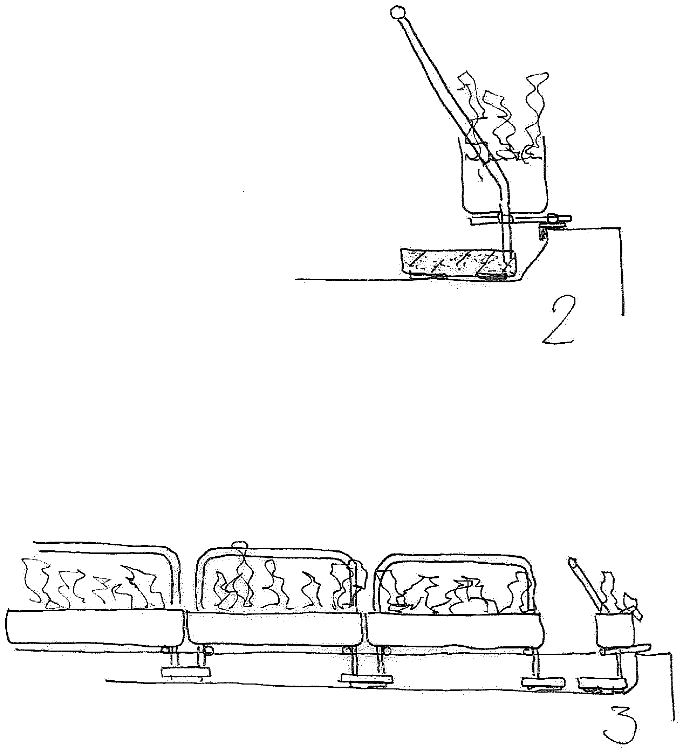

In Figure 1 a top view of a flat roof is provided, showing why the roof and therefore the roof edge both slope (so that, seen from the street they are not fully horizontal), in order to properly drain rainwater. Figure 2 shows that no additional, long horizontal beams stretching onto the roof surface are needed. For the structure is uniquely placed on the roof edge, so that when people lean or fall against the guardrail, all force is exerted on roof edge. Its weight ensures that during such a movement or transfer of forces the structure remains in place. Plant and flower boxes provide embellishment if desired.

Figure 3 illustrates why the guardrail follows the line of the roof edge and thus satisfies the demand of a height of 1200 mm relative to the floor. The containers are level with the roof edge and therefore do not disturb the way the roof edge looks from the street. In this figure the system, the Green Roof Edge Fall Protection Structure, is shown in its entirety. It shows that the guardrail structure is placed on the roof and that the containers are placed using adjustable supports, by which the desired horizontal line is obtained. Subsequently, the containers may if desired be filled with plants, providing the outside of the guardrail with a green aspect that is visible from the street.

Figure 4, finally, shows the invention's principle clearly, with the guardrail structure supported by the roof edge when forces are exerted on the guardrail (the main demand on the system's operation). In this figure, the adjustable supports are shown in detail. They include well-known tubular coupling elements and are not only needed to place the containers, but also to realize the desired support by the roof edge. By adjusting the supports individually to the correct height and on the roof edge, the containers for green roof plants are at the same time placed horizontally.

## Claims

1. A method for providing safety on a roof edge, wherein the method comprises the following:
- placing, at the roof edge, a freestanding guardrail structure standing self-supporting on the roof cover, wherein the guardrail structure includes containers as well as adjustable supports to adjust a height of at least one container, as well as counterweights on corresponding support blocks,
- hanging the containers on the guardrail structure, such that the containers are placed, at least partially, preferably entirely, in height over the roof's edge,
- supporting the guardrail structure on the roof edge to transfer forces exerted on the guardrail structure, and particularly on its guardrail.

2. The method of claim 1, that comprises filling the containers with plants to provide a green aspect near the roof edge and hiding the roof rail from sight, such that the outside view of the flat roof is visually made 'greener' too, providing the building and its skyline with a positive image.

3. The method according to claim 1 or claim 2, that comprises adjusting the adjustable supports and thus the height of at least one container to obtain a horizontal line of containers, which, in combination with the existing roof edge, provide a sufficiently closed fall protection that prevents little children from climbing over or through it.

4. A system for providing safety on a roof edge, that comprises a freestanding guardrail structure standing self-supporting on the roof cover, wherein the guardrail structure comprises the following:
- a frame for supporting containers level with the roof edge,
- adjustable supports to adjust a height position of at least one container,
- a leg to contact the roof edge and to support the guardrail structure on it at least partially, and
- counterweights on corresponding support blocks supported by the roof cover.
